# EUROPEAN PATENT SPECIFICATION

(11) **EP 3 974 080 B1**
(45) Date of publication and mention of the grant of the patent: **17.12.2025**
(21) Application number: 20810028.9
(22) Date of filing: 18.03.2020
(51) Int. Cl.: B21J 1/06, B21K 3/04, C22C 14/00, C22F 1/18, C23C 30/00, C23C 28/02, B32B 15/01, B23K 20/02, B23K 103/14

(54) **TIAL ALLOY MATERIAL, PRODUCTION METHOD THEREFOR, AND HOT FORGING METHOD FOR TIAL ALLOY MATERIAL**
TIAL-LEGIERUNGSMATERIAL, VERFAHREN ZU SEINER HERSTELLUNG UND WARMSCHMIEDEVERFAHREN FÜR TIAL-LEGIERUNGSMATERIAL
MATÉRIAU EN ALLIAGE TIAL, SON PROCÉDÉ DE PRODUCTION ET PROCÉDÉ DE FORGEAGE À CHAUD DE MATÉRIAU EN ALLIAGE TIAL

(30) Priority: 23.05.2019 JP 2019096649
(43) Date of publication of application: 30.03.2022
(73) Proprietor: IHI Corporation, Tokyo 135-8710 (JP)
(72) Inventor: KUBUSHIRO, Keiji, Tokyo 135-8710 (JP)
(74) Representative: MERH-IP Matias Erny Reichl Hoffmann Patentanwälte PartG mbB
(86) International application number: PCT/JP2020/012031
(87) International publication number: WO 2020/235202

(56) References cited:
- EP-A1- 3 330 013
- WO-A1-2017/018517
- WO-A1-2018/043187
- JP-A- H0 776 745
- US-A1- 2019 106 778
- MABUCHI H ET AL: "Oxidation-resistant coating for gamma titanium aluminides by pack cementation", SCRIPTA MATERIALIA, ELSEVIER, AMSTERDAM, NL, vol. 41, no. 5, 6 August 1999 (1999-08-06), pages 511 - 516, XP004325769, ISSN: 1359-6462, DOI: 10.1016/S1359-6462(99)00182-7

## Description

### [Technical Field]

The present disclosure relates to a TiAl alloy material and a method of manufacturing the same, and a method of hot forging a TiAl alloy material, and particularly, to a TiAl alloy material for hot forging and a method of manufacturing the same, and a method of hot forging a TiAl alloy material.

### [Background Art]

A TiAl (titanium aluminide) alloy is an alloy formed of an intermetallic compound of Ti (titanium) and Al (aluminium). The TiAl alloy is excellent in the heat resistance, and has a lighter weight and larger specific strength than an Ni-base alloy, and thus, the TiAl alloy is applied to aircraft engine components such as turbine blades. For Example, the aircraft engine components and the like are formed by hot forging the TiAl alloy (see Patent Literature 1).

### [Citation List]

### [Reference Documents]

[Document 1] Document 1 US2019106778A1 has generally disclosed a TiAl alloy for forging, contains 41 at % or more and 44 at % or less of Al, 4 at % or more and 6 at % or less of Nb, 4 at % or more and 6 at % or less of V, 0.1 at % or more and 1 at % or less of B, and the balance being Ti and inevitable impuritie.
[Document 2] Document 2 MABUCHI H ET AL, "Oxidation-resistant coating for gamma titanium aluminides by pack cementation", SCRIPTA MATERIALIA, ELSEVIER, AMSTERDAM, NL, (19990806), vol. 41, no. 5, doi:10.1016/S1359-6462(99)00182-7, ISSN 1359-6462, pages 511 - 516, XP004325769 has generally disclosed Ti-Al-Cr multilayer coating on a TiAl substrate which is formed bu diffusion of pack alloys placed/coated on the surface.
[Document 3] Document 3 EP3330013A1 has generally disclosed a titanium material for hot rolling includes a titanium cast piece, and titanium sheets that are welded to faces corresponding to rolling surfaces of the titanium cast piece. The titanium cast piece and the titanium sheets have the same kind of chemical composition. The titanium material for hot rolling can maintain good surface properties after hot rolling even if a slabbing process or a finishing process is omitted.
[Document 4] Japanese Patent Application Publication No. Hei 10-156473

### [Summary of Invention]

### [Technical Problem]

When a TiAl alloy is to be hot forged, in order to prevent the oxidation, the TiAl alloy is first coated with a sheath material and then is hot forged. However, if the TiAl alloy is coated with the sheath material to be hot forged, a crack or the like may occur in the sheath material during hot forging. If the crack or the like occurs in the sheath material, the crack or the like propagates to the TiAl alloy, and a forging crack may occur in the TiAl alloy.

Therefore an object of the present disclosure is to provide a TiAl alloy material capable of suppressing a forging crack during hot forging, a method of manufacturing the same, and a method of hot forging a TiAl alloy material.

### [Solution to Problem]

The TiAl alloy material according to the present disclosure is a TiAl alloy material for hot forging that includes a TiAl alloy substrate formed of a TiAl alloy which contains 42 at% or more and 45 at% or less of Al, 3 at% or more and 6 at% or less of Nb, 3 at% or more and 6 at% or less of V, 0.1 at% or more and 0.3 at% or less of B, and the balance being Ti and inevitable impurities, an intermediate layer formed on a surface of the TiAl alloy substrate, and a titanium layer formed on a surface of the intermediate layer, wherein the intermediate layer is formed of a first layer that is formed on a side of the TiAl alloy substrate and is formed of the TiAl alloy which becomes β-TiAl at a hot forging temperature range between 1200 °C or higher and 1350 °C or lower, and a second layer that is formed on a side of the titanium layer and is formed of a β-Ti material.

In the TiAl alloy material according to the present disclosure, the first layer is formed of the TiAl alloy which contains 38 at% or more and 43 at% or less of Al, 3 at% or more and 6 at% or less of V, 3 at% or more and 6 at% or less of Nb, and the balance being Ti, and the second layer is formed of the β-Ti material which contains 25 at% or more and less than 38 at% of Al, 3 at% or more and 6 at% or less of V, 3 at% or more and 6 at% or less of Nb, and the balance being Ti.

In the TiAl alloy material according to the present disclosure, the titanium layer is formed of an α-Ti material.

A method of manufacturing a TiAl alloy material according to the present disclosure is a method of manufacturing a TiAl alloy material for hot forging that includes a TiAl alloy substrate forming step of forming a TiAl alloy substrate by melting and casting a TiAl alloy raw material which contains 42 at% or more and 45 at% or less of Al, 3 at% or more and 6 at% or less of Nb, 3 at% or more and 6 at% or less of V, 0.1 at% or more and 0.3 at% or less of B, and the balance being Ti and inevitable impurities, a titanium coating step of coating the TiAl alloy substrate with a titanium material formed of an α-Ti material, and an intermediate layer forming step of forming an intermediate layer by applying hot isostatic pressing to the TiAl alloy substrate coated with the titanium material at a temperature range between 1200 °C or higher and 1275 °C or lower, at 150 MPa or more, for a hour range between 1 hour or longer and 5 hours or shorter so that the TiAl alloy substrate reacts with the titanium material.

In the method of manufacturing the TiAl alloy material according to the present disclosure, the titanium material is formed of an α-Ti material which may be formed of pure Ti or a Ti alloy, and the thickness of the titanium material may be in a range between 0.5 mm or more and 2 mm or less.

A method of hot forging a TiAl alloy material according to the present disclosure is a method of hot forging a TiAl alloy material for hot forging that includes a titanium coating step of coating, with a titanium material formed of an α-Ti material, a TiAl alloy substrate which contains 42 at% or more and 45 at% or less of Al, 3 at% or more and 6 at% or less of Nb, 3 at% or more and 6 at% or less of V, 0.1 at% or more and 0.3 at% or less of B, and the balance being Ti and inevitable impurities, an intermediate layer forming step of obtaining a TiAl alloy material by the TiAl alloy substrate coated with the titanium material being subjected to hot isostatic pressing at a temperature range between 1200 °C or higher and 1275 °C or lower, at 150 MPa or more, for a hour range between 1 hour or longer and 5 hours or shorter to react with the titanium material to form an intermediate layer, and a hot forging step of hot forging the TiAl alloy material by heating the TiAl alloy material to a temperature range between 1200 °C or higher and 1350 °C or lower.

According to the thus-configured TiAl alloy material and the thus-configured method of manufacturing the same, and the thus-configured method of hot forging a TiAl alloy material, the occurrence of a forging crack during hot forging an alloy can be suppressed.

### [Brief Description of Drawings]

[Fig. 1]

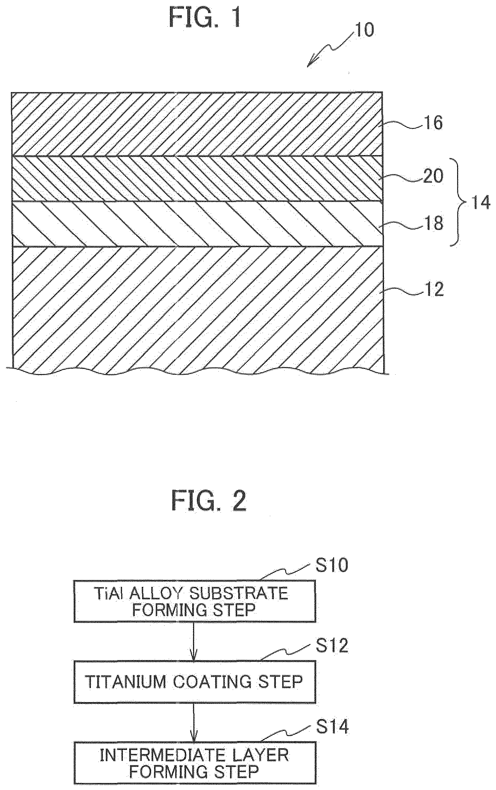

   Fig. 1 is a cross sectional view showing a configuration of a TiAl alloy material for hot forging in an embodiment of the present disclosure.
[Fig. 2]
   Fig. 2 is a flow chart showing a configuration of a method of manufacturing a TiAl alloy material for hot forging in an embodiment of the present disclosure.
[Fig. 3]

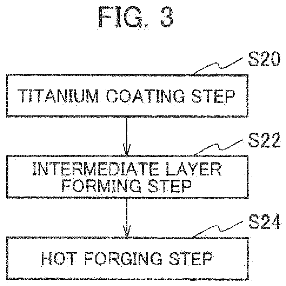

   Fig. 3 is a flow chart showing a configuration of a method of hot forging a TiAl alloy material for hot forging in an embodiment of the present disclosure.
[Fig. 4]

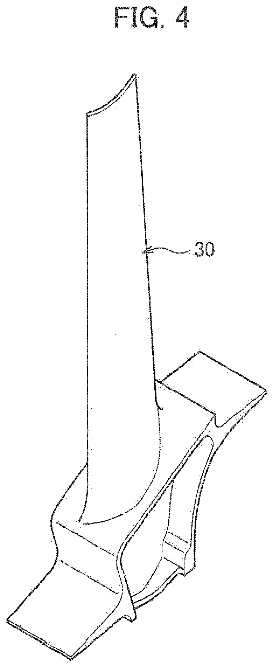

   Fig. 4 is a diagram showing a constitution of a turbine blade in an embodiment of the present disclosure.
[Fig. 5]

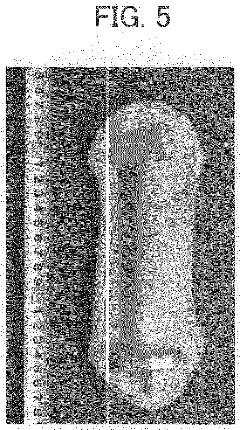

   Fig. 5 is a photograph showing a result of observing the appearance of a hot forged TiAl alloy material of Example 1 in an embodiment of the present disclosure.
[Fig. 6]

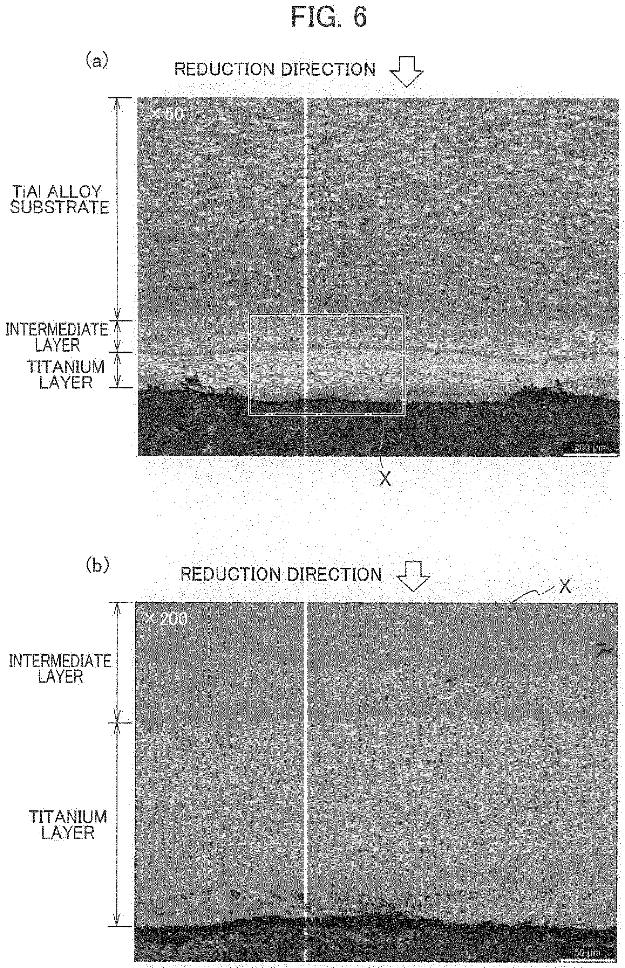

   Fig. 6 is photographs showings results of observing a cross-sectional area of a TiAl alloy material of Example 1 after performing a hot forging test in an embodiment of the present disclosure.
[Fig. 7]

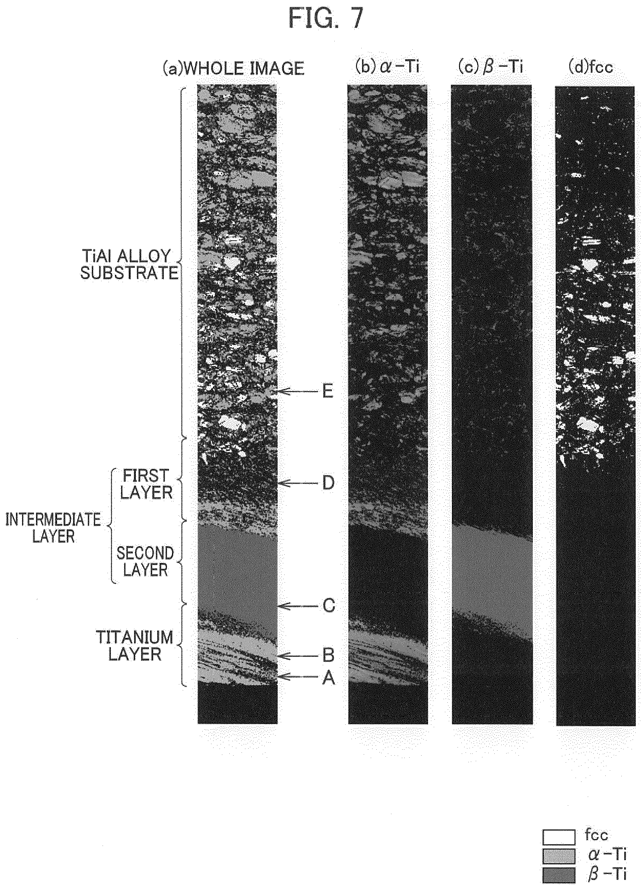

   Fig. 7 is photographs showing results of analyzing, by electron backscatter diffraction (EBSD), a cross-sectional area of a TiAl alloy material of Example 1 subjected to hot isostatic pressing in an embodiment of the present disclosure.

### [Description of Embodiments]

An embodiment of the present disclosure will be described in detail below with reference to the drawings. Fig. 1 is a cross sectional view showing a configuration of a TiAl alloy material 10 for hot forging. The TiAl alloy material 10 for hot forging includes a TiAl alloy substrate 12, an intermediate layer 14, and a titanium layer 16.

The TiAl alloy substrate 12 is formed of a TiAl alloy. The TiAl alloy contains 42 at% or more and 45 at% or less of Al, 3 at% or more and 6 at% or less of Nb, 3 at% or more and 6 at% or less of V, 0.1 at% or more and 0.3 at% or less of B, and the balance being Ti and inevitable impurities. Next, the reason why a composition range of each alloy component contained in the TiAl alloy is limited will be explained.

The content of Al (aluminium) is 42 at% or more and 45 at% or less. If the content of Al is less than 42 at%, the content of Ti becomes relatively large, and therefore, the specific gravity becomes large, and the specific strength decreases. If the content of Al is larger than 45 at%, a hot forging temperature becomes high, and accordingly, the hot forgeability degrades.

Nb (niobium) is a β-phase stabilizing element and has a function of forming a β-phase which is excellent in high-temperature deformation during hot forging. The content of Nb is 3 at% or more and 6 at% or less. If the content of Nb is 3 at% or more and 6 at% or less, the β-phase can be formed during hot forging. Further, if the content of Nb is less than 3 at%, or if the content of Nb is more than 6 at%, the mechanical strength decreases.

V (vanadium) is a β-phase stabilizing element and has a function of forming a β-phase which is excellent in high-temperature deformation during hot forging. The content of V is 3 at% or more and 6 at% or less. If the content of V is 3 at% or more and 6 at% or less, the β-phase can be formed during hot forging. Further, if the content of V is less than 3 at%, the hot forgeability degrades. If the content of V is more than 6 at%, the mechanical strength decreases.

B (boron) has a function of enhancing the ductility by refining crystal grains. The addition of B enhances the ductility in a temperature range between 1100 °C or higher and 1350 °C or lower, and further enhances the ductility in a temperature range between 1200 °C or higher and 1350 °C or lower. As described above, B has a function of enhancing the ductility at high temperatures, and thus, the hot forgeability can be improved.

The content of B is 0.1 at% or more and 0.3 at% or less. If the content of B is less than 0.1 at%, a grain size of crystal grains becomes larger than 200 µm, and thus, the ductility is degraded, and accordingly the hot forgeability is degraded. If the content of B is more than 0.3 at%, borides with a grain size larger than 100 µm are easily formed when an ingot is formed, and thus, the ductility is degraded, and accordingly the hot forgeability is degraded. The borides are formed in a needle shape and is formed of TiB, TiB₂ or the like.

In a metal structure of the TiAl alloy, a crystal grain size is 200 µm or less, and borides (TiB, TiB₂ and the like) with a grain size of 100 µm or less are contained, and accordingly the ductility is increased. From the above, since high-temperature deformation characteristics during hot forging are excellent, the hot forgeability can be improved.

The intermediate layer 14 is formed on a surface of the TiAl alloy substrate 12. The intermediate layer 14 is formed of a first layer 18 formed on a side of the TiAl alloy substrate 12 and a second layer 20 formed on a side of the titanium layer 16. The intermediate layer 14 has a function of preventing the propagation of a crack or the like occurred in the titanium layer 16 during hot forging to the TiAl alloy substrate 12. The thickness of the intermediate layer 14 may be, for example, 20 µm or more.

The first layer 18 is formed on the side of the TiAl alloy substrate 12 and is formed of the TiAl alloy which becomes β-TiAl at a hot forging temperature range between 1200 °C or higher and 1350 °C or lower. The first layer 18 may be formed of the TiAl alloy which contains 38 at% or more and 43 at% or less of Al, 3 at% or more and 6 at% or less of V, 3 at% or more and 6 at% or less of Nb, and the balance being Ti. The TiAl alloy becomes α-TiAl at room temperature, and becomes β-TiAl at the hot forging temperature range between 1200 °C or higher and 1350 °C or lower. The thickness of the first layer 18 may be, for example, 100 µm or more and 200 µm or less.

The second layer 20 is formed on the side of the titanium layer 16 and is formed of a β-Ti material. A β-Ti alloy can be used as the β-Ti material. The second layer 20 may be formed of the β-Ti material which contains 25 at% or more and less than 38 at% of Al, 3 at% or more and 6 at% or less of V, 3 at% or more and 6 at% or less of Nb, and the balance being Ti. The thickness of the second layer 20 may be, for example, 100 µm or more and 200 µm or less.

As described above, the first layer 18 is formed of the TiAl alloy which becomes β-TiAl at a hot forging temperature range between 1200 °C or higher and 1350 °C or lower, and the second layer 20 is formed of the β-Ti material. Therefore, at the time of hot forging, the first layer 18 and the second layer 20 in the intermediate layer 14 are formed of β-phases which are excellent in high-temperature deformation. Accordingly, the intermediate layer 14 is easily deformed at a high temperature and becomes soft, and thus, even if the crack or the like occurs in the titanium layer 16 during hot forging, the crack or the like is absorbed and restrained in the intermediate layer 14. As a result, the propagation of the crack or the like to the TiAl alloy substrate 12 can be prevented, and accordingly, the forging crack of the TiAl alloy substrate 12 is suppressed.

The titanium layer 16 is formed on a surface of the intermediate layer 14. The titanium layer 16 has a function of preventing the oxidation of the TiAl alloy substrate 12 and suppressing the formation of an α-case or the like. Further, the titanium layer 16 has a function of keeping the TiAl alloy substrate 12 warm during hot forging. The titanium layer 16 can be formed of pure Ti or a Ti alloy (for example, Ti-6Al-4V alloy or the ilke). The titanium layer 16 is formed of an α-Ti material such as pure Ti or an α-Ti alloy. The titanium layer 16 may contain Al, Nb, or V which is diffused from the TiAl alloy substrate 12 by hot isostatic pressing which will be described later. The titanium layer 16 may be formed of an α-Ti material which contains 0 at% or more and 25 at% or less of Al, 0 at% or more and 3 at% or less of V, 0 at% or more and 2 at% or less of Nb, and the balance being Ti. The thickness of the titanium layer 16 may be, for example, 100 µm or more and 350 µm or less.

Next, a method of manufacturing the TiAl alloy material 10 for hot forging will be described. Fig. 2 is a flow chart showing a configuration of the method of manufacturing the TiAl alloy material 10 for hot forging. The method of manufacturing the TiAl alloy material 10 for hot forging includes a TiAl alloy substrate forming step (S10), a titanium coating step (S12), and an intermediate layer forming step (S14).

The TiAl alloy substrate forming step (S10) is a step of forming the TiAl alloy substrate 12 by melting and casting the TiAl alloy raw material. The TiAl alloy substrate 12 formed of an ingot or the like is formed by melting the TiAl alloy raw material in a vacuum induction furnace or the like and casting the TiAl alloy raw material. For casting the TiAl alloy raw material, a casting system used for casting a general metallic material can be used.

Used is the TiAl alloy raw material with an alloy composition containing 42 at% or more and 45 at% or less of Al, 3 at% or more and 6 at% or less of Nb, 3 at% or more and 6 at% or less of V, 0.1 at% or more and 0.3 at% or less of B, and the balance being Ti and inevitable impurities. The TiAl alloy raw material has the above described alloy composition, and thus, the TiAl alloy does not pass through the α single phase region during a process of cooling from a melting temperature. If the TiAl alloy passes through the α single phase region, the ductility degrades due to coarsening of crystal grains. The cast TiAl alloy does not pass through the α single phase region, and thus, coarsening of the crystal grains is suppressed.

In the metal structure of the cast TiAl alloy, a crystal grain size is 200 µm or less, and borides with a grain size of 100 µm or less are contained. The borides are formed in a needle shape and are formed of TiB, TiB₂ or the like. As described above, the metal structure of the cast TiAl alloy is formed of fine crystal grains with a crystal grain size of 200 µm or less, and contains borides with a small grain size of 100 µm or less, and accordingly, the hot forgeability can be improved.

The titanium coating step (S12) is a step of coating the TiAl alloy substrate 12 with a titanium material. The titanium material is coated on the surface of the TiAl alloy substrate 12. A method of coating with the titanium material may be performed as follows. First, the entire surface of the TiAl alloy substrate 12 is covered with the titanium material. In order to prevent the oxidation of the TiAl alloy substrate 12, the inside of the TiAl alloy substrate 12 covered with the titanium material may be evacuated. The titanium material is welded by electron beam welding or the like, so that the exterior of the TiAl alloy substrate 12 is coated with the titanium material, and the TiAl alloy substrate 12 is sealed. Corners of the TiAl alloy substrate 12 coated with the titanium material may be deburred or the like.

The titanium material can be formed of pure Ti or a Ti alloy (for example, Ti-6Al-4V alloy and the like). The thickness of the titanium material may be 0.5 mm or more and 2 mm or less. If the thickness of the titanium material is less than 0.5 mm, there is a possibility that the titanium material is cracked during hot forging, and the TiAl alloy substrate 12 is exposed. The reason why the thickness of the titanium material is 2 mm or less is, because if the thickness of the titanium material is 2 mm, the exposure of the TiAl alloy substrate 12 due to cracking of the titanium material during hot forging can be suppressed. For the titanium material, the α-Ti material such as pure Ti or an α-Ti alloy may be used. The α-Ti material is excellent in the weldability, and thus, the titanium material can be easily welded by electron beam welding or the like. Since the α-Ti material is excellent in toughness, the titanium material can be hardly cracked. As the titanium material, a titanium sheath material can be used.

The intermediate layer forming step (S14) is a step of forming the intermediate layer 14 by applying hot isostatic pressing to the TiAl alloy substrate 12 coated with the titanium material at a temperature range between 1200 °C or higher and 1275 °C or lower, at 150 MPa or more, and for a hour range between 1 hour or longer and 5 hours or shorter to react the titanium material with the TiAl alloy substrate 12.

By applying hot isostatic pressing (HIP) to the TiAl alloy substrate 12 coated with the titanium material, the titanium material and the TiAl alloy substrate 12 react to form the intermediate layer 14. More specifically, by applying hot isostatic pressing to the TiAl alloy substrate 12 coated with the titanium material, Al, V and Nb are diffused and reacted from the side of the TiAl alloy substrate 12 to the side of the titanium material to form the first layer 18 and the second layer 20 in the intermediate layer 14. Furthermore, by applying hot isostatic pressing to the TiAl alloy substrate 12, casting defects such as voids in the TiAl alloy substrate 12 can be suppressed.

The temperature of the hot isostatic pressing may be in a temperature range between 1200 °C or higher and 1275 °C or lower. If the temperature of the hot isostatic pressing is lower than 1200 °C, the diffusion reaction of Al, V, Nb hardly occurs from the side of the TiAl alloy substrate 12 to the side of the titanium material, and accordingly, the intermediate layer 14 is hardly formed. The reason why the temperature of the hot isostatic pressing may be 1275 °C or lower is because if the temperature of the hot isostatic pressing is 1275 °C, the diffusion reaction of Al, V, Nb occurs favorably from the side of the TiAl alloy substrate 12 to the side of the titanium material.

The pressure of the hot isostatic pressing may be 150 MPa or more. This is because, if the pressure of the hot isostatic pressing is lower than 150 MPa, the TiAl alloy substrate 12 and the titanium material are less likely to adhere each other, and accordingly, Al, V, Nb are less likely diffused and reacted from the side of the TiAl alloy substrate 12 to the side of the titanium material. By setting the pressure of the hot isostatic pressing to 150 MPa or more, the TiAl alloy substrate 12 and the titanium material can be adhered favorably. Further, the reason why the pressure of the hot isostatic pressing may be 150 MPa or more is because if the pressure of the hot isostatic pressing is 150 MPa or more, the casting defect can be satisfactorily suppressed. The pressure of the hot isostatic pressing may be, for example, 150 MPa or more and 200 MPa or less.

Further, the titanium layer 16 is formed on the surface of the intermediate layer 14 by applying hot isostatic pressing to the TiAl alloy substrate 12 coated with the titanium material. The titanium layer 16 may be formed to have a composition that is same as that of the titanium material. The titanium layer 16 may be formed by the diffusion reaction of Al, V, Nb contained in the TiAl alloy substrate 12 to the titanium material.

The hot isostatic pressing may be performed in a vacuum atmosphere or an inert gas atmosphere with gas such as argon gas in order to prevent the oxidation. For the hot isostatic pressing, HIP equipment used in the HIP treatment of a general metallic material can be used.

The TiAl alloy substrate 12 does not pass through the α single phase region during a temperature rise from a room temperature to a heating temperature range between 1200 °C or higher and 1275 °C or lower. Since the TiAl alloy substrate does not pass through the α single phase region, coarsening of the crystal grains is suppressed, and accordingly the degradation in the ductility is suppressed and the hot forgeability can be improved. In this manner, it is possible to manufacture the TiAl alloy material 10 for hot forging.

Next, a method of hot forging the TiAl alloy material 10 for hot forging will be described. Fig. 3 is a flow chart showing a configuration of the method of hot forging the TiAl alloy material 10 for hot forging. The method of hot forging the TiAl alloy material 10 for hot forging includes a titanium coating step (S20), an intermediate layer forming step (S22), and a hot forging step (S24).

The titanium coating step (S20) is a step of coating, with the titanium material formed of an α-Ti material, the TiAl alloy substrate formed of the TiAl alloy which contains 42 at% or more and 45 at% or less of Al, 3 at% or more and 6 at% or less of Nb, 3 at% or more and 6 at% or less of V, 0.1 at% or more and 0.3 at% or less of B, and the balance being Ti and inevitable impurities. The titanium coating step (S20) is the same as the titanium coating step (S12) described above, and therefore, a detailed description thereof will be omitted.

In the intermediate layer forming step (S22), the TiAl alloy material 10 is obtained by applying hot isostatic pressing to the TiAl alloy substrate 12 coated with the titanium material at a temperature range between 1200 °C or higher and 1275 °C or lower, at 150 MPa or more, and for a hour range between 1 hour or longer and 5 hours or shorter to react the titanium material with the TiAl alloy substrate 12 to form the intermediate layer 14. The TiAl alloy material 10 for hot forging is obtained by applying hot isostatic pressing to the TiAl alloy substrate 12 coated with the titanium material to react the titanium material with the TiAl alloy substrate 12 to form the intermediate layer 14. The intermediate layer forming step (S22) is the same as the intermediate layer forming step (S14) described above, and thus, a detailed description thereof will be omitted.

The hot forging step (S24) is a step of hot forging the TiAl alloy material 10 by heating the TiAl alloy material 10 to a temperature range between 1200 °C or higher and 1350 °C or lower. The TiAl alloy material 10 for hot forging is hot forged by being heating to a hot forging temperature range between 1200 °C or higher and 1350 °C or lower.

The first layer 18 in the intermediate layer 14 is formed of the TiAl alloy which becomes β-TiAl at a hot forging temperature range between 1200 °C or higher and 1350 °C or lower, and the second layer 20 is formed of the β-Ti material. For this reason, during hot forging, the first layer 18 and the second layer 20 are formed of β-phases which are excellent in high-temperature deformation. Accordingly, the intermediate layer 14 is easily deformed at high temperatures and becomes soft, and thus, even if a crack or a fissure occurs in the titanium layer 16 during hot forging, the crack or the like is absorbed and restrained in the intermediate layer 14. As a result, the propagation of the crack or the like to the TiAl alloy substrate 12 can be prevented, and thus, the forging crack of the TiAl alloy substrate 12 is suppressed. This suppresses the forging crack of the TiAl alloy substrate 12, even when the alloy is hot forged at a high speed due to a large strain rate, and thus, high-speed forging becomes possible.

Further, the TiAl alloy substrate 12 is heated to a temperature range between 1200 °C or higher and 1350 °C or lower to be held in the two-phase region of the α-phase + the β-phase or the three-phase region of the α-phase + the β-phase + the γ-phase. The heated TiAl alloy substrate 12 contains the β-phase which is excellent in high-temperature deformation, and thus, the TiAl alloy is easily deformed. Further, the TiAl alloy substrate 12 does not pass through the α single phase region during a temperature rise from a room temperature to a heating temperature range between 1200 °C or higher and 1350 °C or lower. Since the TiAl alloy substrate 12 does not pass through the α single phase region, coarsening of the crystal grains is suppressed, and accordingly, the degradation in the ductility can be suppressed, and the hot forgeability can be improved.

Hot forging may be applied to the TiAl alloy material 10 for hot forging which is heated to a temperature range between 1200 °C or higher and 1350 °C or lower, at a strain rate of 1%/second or higher. Even if the TiAl alloy material 10 is hot forged at a high strain rate of 1%/second or higher, because of the presence of the intermediate layer 14, forging cracks of the TiAl alloy substrate 12 can be suppressed. The TiAl alloy material 10 may be hot forged in air atmosphere or in inert gas atmosphere with gas such as argon gas. For the method of hot forging the alloy, a method of forging a general metallic material such as free-forging, die forging, roll forging, extrusion and upsetting, and a forging apparatus for performing the method can be used. After hot forging, the hot-forged TiAl alloy may be slowly cooled by furnace cooling or the like. The hot-forged TiAl alloy does not pass through the α single phase region, even in a process of being slowly cooled, and thus, coarsening of the crystal grains is suppressed.

The TiAl alloy material 10 for hot forging can be applied to a turbine blade or the like of an aircraft engine component. Fig. 4 is a diagram showing a constitution of a turbine blade 30. The turbine blade 30 and the like can be hot forged at high speed at a strain rate of higher than 1%/second, and thus, the productivity of a TiAl alloy part such as the turbine blade 30 can be improved. Further, the turbine blade 30 and the like may be manufactured only by performing die forging, or may be manufactured by performing die forging after performing extrusion and upsetting. By manufacturing the turbine blade 30 and the like by performing die forging after performing extrusion and upsetting, the excess thickness can be reduced, and accordingly the manufacturing cost can be reduced.

The above described TiAl alloy material for hot forging includes the TiAl alloy substrate formed of the TiAl alloy which contains 42 at% or more and 45 at% or less of Al, 3 at% or more and 6 at% or less of Nb, 3 at% or more and 6 at% or less of V, 0.1 at% or more and 0.3 at% or less of B, and the balance being Ti and inevitable impurities, the intermediate layer formed on the surface of the TiAl alloy substrate, and the titanium layer formed on the surface of the intermediate layer, further, the intermediate layer is formed of the first layer that is formed on the side of the TiAl alloy substrate and is formed of the TiAl alloy which becomes β-TiAl at a hot forging temperature range between 1200 °C or higher and 1350 °C or lower, and the second layer that is formed on the side of the titanium layer and is formed of a β-Ti material. Accordingly, even if the crack or the fissure occurs in the titanium layer during hot forging, the crack or the like is absorbed and restrained in the intermediate layer. As a result, the propagation of the crack or the like to the TiAl alloy substrate can be prevented, and accordingly a forging crack of the TiAl alloy substrate is suppressed. Further, since the forging crack during hot forging can be suppressed, the TiAl alloy material for hot forging can be hot forged at high speed during hot forging.

The above described method of manufacturing the TiAl alloy material for hot forging includes the TiAl alloy substrate forming step of forming the TiAl alloy substrate by melting and casting the TiAl alloy raw material formed of the TiAl alloy which contains 42 at% or more and 45 at% or less of Al, 3 at% or more and 6 at% or less of Nb, 3 at% or more and 6 at% or less of V, 0.1 at% or more and 0.3 at% or less of B, and the balance being Ti and inevitable impurities, the titanium coating step of coating the TiAl alloy substrate with the titanium material formed of an α-Ti material, and the intermediate layer forming step of applying hot isostatic pressing to the TiAl alloy substrate coated with the titanium material at a temperature range between 1200 °C or higher and 1275 °C or lower, at 150 MPa or more, for a hour range between 1 hour or longer and 5 hours or shorter to react the titanium material with the TiAl alloy substrate to form the intermediate layer. As a result, it is possible to manufacture the TiAl alloy material for hot forging which can be forged at high speed by suppressing the forging crack during hot forging.

The above described method of hot forging the TiAl alloy material for hot forging incudes the titanium coating step of coating, with the titanium material formed of an α-Ti material, the TiAl alloy substrate formed of the TiAl alloy which contains 42 at% or more and 45 at% or less of Al, 3 at% or more and 6 at% or less of Nb, 3 at% or more and 6 at% or less of V, 0.1 at% or more and 0.3 at% or less of B, and the balance being Ti and inevitable impurities, the intermediate layer forming step of obtaining the TiAl alloy material by the TiAl alloy substrate coated with the titanium material being subjected to hot isostatic pressing at a temperature range between 1200 °C or higher and 1275 °C or lower, at 150 MPa or more, for a hour range between 1 hour or longer and 5 hours or shorter to react with the titanium material to form the intermediate layer, and the hot forging step of hot forging the TiAl alloy material by heating the TiAl alloy material to a temperature range between 1200 °C or higher and 1350 °C or lower. This enables the TiAl alloy material for hot forging to be forged at high speed by suppressing the forging crack during hot forging, and accordingly, the productivity can be improved.

### [Examples]

Hot forging tests were performed for TiAl alloy materials.

### (Preparation of TiAl alloy materials for hot forging)

First, the TiAl alloy material of Example 1 will be described. The TiAl alloy substrate was formed by melting the TiAl alloy raw material in a high-frequency vacuum melting furnace and casting the TiAl alloy raw material. Used is the TiAl alloy raw material with an alloy composition containing 42 at% or more and 45 at% or less of Al, 3 at% or more and 6 at% or less of Nb, 3 at% or more and 6 at% or less of V, 0.1 at% or more and 0.3 at% or less of B, and the balance being Ti and inevitable impurities. The shape of the TiAl alloy substrate was cylindrical.

The surface of the TiAl alloy substrate was coated with the titanium sheath material to be subjected to a titanium coating process. Pure Titanium was used as the titanium sheath material. The thickness of the titanium sheath material was in a range from 0.5 mm to 2 mm. The TiAl alloy substrate was covered with the titanium sheath material, and then is evacuated to be sealed by electron beam welding.

The TiAl alloy substrate coated with the titanium sheath material was subjected to hot isostatic pressing (HIP) to react with the titanium sheath material to form the intermediate layer. The hot isostatic pressing was performed in vacuum atmosphere at a temperature range between 1200 °C or higher and 1275 °C or lower, at 150 MPa or more, at a hour range between 1 hour or longer and 5 hours or shorter. The TiAl alloy substrate was canned in this manner to prepare the TiAl alloy material of Example 1.

Next, the TiAl alloy material of Comparative Example 1 will be described. The TiAl alloy material of Comparative Example 1 was same as the TiAl alloy material of Example 1 except that hot isostatic pressing was not performed to the TiAl alloy material of Comparative Example 1. More specifically, for the TiAl alloy material of Comparative Example 1, the TiAl alloy substrate with an alloy composition which is the same as that of the TiAl alloy material of Example 1 was used. The TiAl alloy material of Comparative Example 1 was subjected to a titanium coating process which is same as that of the TiAl alloy material of Example 1. A hot forging test described later was performed for the TiAl alloy material of Comparative Example 1 without applying hot isostatic pressing to the TiAl alloy material of Comparative Example 1.

### (Hot forging test)

Hot forging tests were performed for the TiAl alloy materials of Example 1 and Comparative Example 1. In the hot forging tests, the TiAl alloy substrates were held in the two-phase region of the α-phase + the β-phase at a temperature range between 1250 °C or higher and 1275 °C or lower in air atmosphere, and were press type forged at a strain rate of 1%/second. The appearance of the hot forged TiAl alloy materials of Example 1 and Comparative Example 1 was observed. Fig. 5 is a photograph showing a result of observing the appearance of the hot forged TiAl alloy material of Example 1. No forging crack was observed in the TiAl alloy material of Example 1. On the other hand, in the TiAl alloy material of Comparative Example 1, the forging crack was observed. This makes clear that the TiAl alloy material of Example 1 can suppress the forging crack during hot forging.

Next, a cross-sectional area of the TiAl alloy material of Example 1 subjected to the hot forging test was observed by using an optical microscope. Fig. 6 is photographs showing the observation results of the cross-sectional area of the TiAl alloy material of Example 1 after performing a hot forging test, that is, Fig. 6(a) is a low-magnification photograph, and Fig. 6(b) is an enlarged photograph of a portion shown by X in Fig. 6(a). An arrow indicates the direction of reduction during hot forging. As shown in Fig. 6, the intermediate layer was formed between the TiAl alloy substrate and the titanium layer. Further, in the TiAl alloy substrate, the crack or the like did not occur, and no forging crack was observed either.

### (Evaluation of intermediate layers and the like)

The cross-sectional area of the TiAl alloy material of Example 1 subjected to hot isostatic pressing was analyzed by electron backscatter diffraction (EBSD). Fig. 7 is photographs showing results of analyzing, by electron backscatter diffraction (EBSD), the cross-sectional area of the TiAl alloy material of Example 1 subjected to hot isostatic pressing. Fig. 7(a) is a whole image, Fig. 7(b) is an α-Ti image, Fig. 7(c) is a β-Ti image, and Fig. 7(d) is an fcc (face-centered cubic lattice) image. In Figs. 7(a) to 7(d), dark gray represents the β-Ti image, light gray represents the α-Ti image, and white represents the fcc (face-centered cubic lattice) image.

The TiAl alloy material of Example 1 subjected to hot isostatic pressing was formed of the TiAl alloy substrate, the intermediate layer formed on the surface of the TiAl alloy substrate, and the titanium layer formed on the surface of the intermediate layer. The titanium layer was formed of the α-Ti material. The thickness of the titanium layer was in a range from 100 µm to 350 µm.

The intermediate layer was formed of the first layer formed on the side of the TiAl alloy substrate and the second layer formed on the side of the titanium layer. The first layer was formed of α-TiAl at room temperature. The thickness of the first layer was in a range from 100 µm to 200 µm. The second layer was formed of the β-Ti material. The thickness of the second layer was in a range from 100 µm to 200 µm.

Then, elemental analysis was performed on the TiAl alloy substrate, the intermediate layer (the first and second layers), and the titanium layer by energy dispersive X-ray analysis (EDX). Table 1 shows results of the elemental analysis of typical portions in the TiAl alloy substrate, the intermediate layer (the first and second layers), and the titanium layer. A and B correspond to the titanium layer. C corresponds to the second layer in the intermediate layer. D corresponds to the first layer in the intermediate layer. E corresponds to the TiAl alloy substrate.

**[Table 1]**

| | COMPOSITION (at%) | | | |
|---|---|---|---|---|
| | Ti | Al | V | Nb |
| A | 83.61 | 14.45 | 1.20 | 0.74 |
| B | 73.31 | 22.94 | 2.11 | 1.64 |
| C | 54.50 | 35.92 | 5.24 | 4.34 |
| D | 50.41 | 40.06 | 5.32 | 4.21 |
| E | 48.88 | 42.35 | 4.73 | 4.05 |

The first layer in the intermediate layer was formed of the TiAl alloy which contains 38 at% or more and 43 at% or less of Al, 3 at% or more and 6 at% or less of V, 3 at% or more and 6 at% or less of Nb, and the balance being Ti. It became clear that the TiAl alloy with the alloy composition becomes β-TiAl at the hot forging temperature range between 1200 °C or higher and 1350 °C or lower.

The second layer in the intermediate layer was formed of the β-Ti material which contains 25 at% or more and less than 38 at% of Al, 3 at% or more and 6 at% or less of V, 3 at% or more and 6 at% or less of Nb, and the balance being Ti.

The titanium layer was formed of the α-Ti material which contains more than 0 at% and 25 at% or less of Al, more than 0 at% and 3 at% or less of V, more than 0 at% and 2 at% or less of Nb, and the balance being Ti.

### [Industrial Applicability]

The present disclosure can suppress forging cracks during hot forging, and therefore, the present disclosure is useful for a turbine blade or the like of an aircraft engine component.

## Claims

1. A TiAl alloy material (10) for hot forging comprising:
a TiAl alloy substrate (12) formed of a TiAl alloy which contains 42 at% or more and 45 at% or less of Al, 3 at% or more and 6 at% or less of Nb, 3 at% or more and 6 at% or less of V, 0.1 at% or more and 0.3 at% or less of B, and the balance being Ti and inevitable impurities,
an intermediate layer (14) formed on a surface of the TiAl alloy substrate (12), and
a titanium layer (16) formed on a surface of the intermediate layer (14), wherein
the intermediate layer (14) is formed of a first layer (18) that is formed on a side of the TiAl alloy substrate (12) and is formed of the TiAl alloy which becomes β-TiAl at a hot forging temperature range between 1200 °C or higher and 1350 °C or lower, and a second layer (20) that is formed on a side of the titanium layer (16) and is formed of a β-Ti material,
wherein the first layer (18) is formed of the TiAl alloy which contains 38 at% or more and 43 at% or less of Al, 3 at% or more and 6 at% or less of V, 3 at% or more and 6 at% or less of Nb, and the balance being Ti; and
the second layer (20) is formed of the β-Ti material which contains 25 at% or more and less than 38 at% of Al, 3 at% or more and 6 at% or less of V, 3 at% or more and 6 at% or less of Nb, and the balance being Ti; and
wherein the titanium layer (16) is formed of an α-Ti material.

2. A method of manufacturing a TiAl alloy material (10) for hot forging, comprising:
a TiAl alloy substrate forming step (S10) of forming a TiAl alloy substrate (12) by melting and casting a TiAl alloy raw material which contains 42 at% or more and 45 at% or less of Al, 3 at% or more and 6 at% or less of Nb, 3 at% or more and 6 at% or less of V, 0.1 at% or more and 0.3 at% or less of B, and the balance being Ti and inevitable impurities,
a titanium coating step (S12) of coating the TiAl alloy substrate (12) with a titanium material formed of an α-Ti material, and
an intermediate layer forming step (S14) of forming an intermediate layer (14) by applying hot isostatic pressing to the TiAl alloy substrate (12) coated with the titanium material at a temperature range between 1200 °C or higher and 1275 °C or lower, at 150 MPa or more, for a hour range between 1 hour or longer and 5 hours or shorter so that the TiAl alloy substrate (12) reacts with the titanium material.

3. The method of manufacturing the TiAl alloy material (10) according to claim 2, wherein
a thickness of the titanium material is in a range between 0.5 mm or more and 2 mm or less.

4. A method of hot forging a TiAl alloy material for hot forging, comprising:
a titanium coating step (S20) of coating, with a titanium material formed of an α-Ti material, a TiAl alloy substrate (12) which contains 42 at% or more and 45 at% or less of Al, 3 at% or more and 6 at% or less of Nb, 3 at% or more and 6 at% or less of V, 0.1 at% or more and 0.3 at% or less of B, and the balance being Ti and inevitable impurities;
an intermediate layer forming step (S22) of obtaining a TiAl alloy material by the TiAl alloy substrate (12) coated with the titanium material being subjected to hot isostatic pressing at a temperature range between 1200 °C or higher and 1275 °C or lower, at 150 MPa or more, for a hour range between 1 hour or longer and 5 hours or shorter to react with the titanium material to form an intermediate layer (14), and
a hot forging step (S24) of hot forging the TiAl alloy material by heating the TiAl alloy material to a temperature range between 1200 °C or higher and 1350 °C or lower.

## Patentansprüche

1. TiAl-Legierungsmaterial (10) zum Warmschmieden, umfassend:
ein TiAl-Legierungssubstrat (12), das aus einer TiAl-Legierung gebildet ist, die 42 at% oder mehr und 45 at% oder weniger Al, 3 at% oder mehr und 6 at% oder weniger Nb, 3 at% oder mehr und 6 at% oder weniger V, 0,1 at% oder mehr und 0,3 at% oder weniger B enthält, wobei der Rest aus Ti und unvermeidbaren Verunreinigungen besteht,
eine Zwischenschicht (14), die auf einer Fläche des TiAl-Legierungssubstrats (12) gebildet ist, und
eine Titanschicht (16), die auf einer Fläche der Zwischenschicht (14) gebildet ist, wobei
die Zwischenschicht (14) aus einer ersten Schicht (18), die auf einer Seite des TiAl-Legierungssubstrats (12) und aus der TiAl-Legierung gebildet ist, die bei einer Warmschmiedetemperatur zwischen 1200 °C oder höher und 1350 °C oder niedriger zu β-TiAl wird, und einer zweiten Schicht (20) gebildet ist, die auf einer Seite der Titanschicht (16) und aus einem β-Ti-Material gebildet ist,
wobei die erste Schicht (18) aus der TiAl-Legierung gebildet ist, die 38 at% oder mehr und 43 at% oder weniger Al, 3 at% oder mehr und 6 at% oder weniger V, 3 at% oder mehr und 6 at% oder weniger Nb enthält, wobei der Rest aus Ti besteht; und
die zweite Schicht (20) aus dem β-Ti-Material gebildet ist, das 25 at% oder mehr und weniger als 38 at% Al, 3 at% oder mehr und 6 at% oder weniger V, 3 at% oder mehr und 6 at% oder weniger Nb enthält, wobei der Rest aus Ti besteht; und
wobei die Titanschicht (16) aus einem α-Ti-Material gebildet ist.

2. Verfahren zur Herstellung eines TiAl-Legierungsmaterials (10) zum Warmschmieden, umfassend:
einen TiAl-Legierungssubstrat-Bildungsschritt (S10) des Bildens eines TiAl-Legierungssubstrats (12) durch Schmelzen und Gießen eines TiAl-Legierungsrohmaterials, das 42 at% oder mehr und 45 at% oder weniger Al, 3 at% oder mehr und 6 at% oder weniger Nb, 3 at% oder mehr und 6 at% oder weniger V, 0,1 at% oder mehr und 0,3 at% oder weniger B enthält, wobei der Rest aus Ti und unvermeidbaren Verunreinigungen besteht,
einen Titanbeschichtungsschritt (S12) des Beschichtens des TiAl-Legierungssubstrats (12) mit einem Titanmaterial, das aus einem α-Ti-Material gebildet ist, und
einen Zwischenschichtbildungsschritt (S14) des Bildens einer Zwischenschicht (14) durch Anwenden von isostatischem Heißpressen an dem mit dem Titanmaterial beschichteten TiAl-Legierungssubstrat (12) in einem Temperaturbereich zwischen 1200 °C oder höher und 1275 °C oder niedriger, bei 150 MPa oder mehr, für einen Stundenbereich zwischen 1 Stunde oder länger und 5 Stunden oder kürzer, sodass das TiAl-Legierungssubstrat (12) mit dem Titanmaterial reagiert.

3. Verfahren zur Herstellung des TiAl-Legierungsmaterials (10) nach Anspruch 2, wobei
eine Dicke des Titanmaterials in einem Bereich zwischen 0,5 mm oder mehr und 2 mm oder weniger liegt.

4. Verfahren zum Warmschmieden eines TiAl-Legierungsmaterials für Warmschmieden, umfassend:
einen Titanbeschichtungsschritt (S20) des Beschichtens, mit einem TiAl-Material, das aus einem α-Ti-Material gebildet ist, eines TiAl-Legierungssubstrats (12), das 42 at% oder mehr und 45 at% oder weniger Al, 3 at% oder mehr und 6 at% oder weniger Nb, 3 at% oder mehr und 6 at% oder weniger V, 0,1 at% oder mehr und 0,3 at% oder weniger B enthält, wobei der Rest aus Ti und unvermeidbaren Verunreinigungen besteht;
einen Zwischenschichtbildungsschritt (S22) des Erhaltens eines TiAl-Legierungsmaterials, indem das mit dem Titanmaterial beschichtete TiAl-Legierungssubstrat (12) einem isostatischen Heißpressen in einem Temperaturbereich zwischen 1200 °C oder höher und 1275 °C oder niedriger, bei 150 MPa oder mehr, für einen Stundenbereich zwischen 1 Stunde oder länger und 5 Stunden oder kürzer unterzogen wird, sodass es mit dem Titanmaterial reagiert, um eine Zwischenschicht (14) zu bilden, und
einen Warmschmiedeschritt (S24) des Warmschmiedens des TiAl-Legierungsmaterials durch Erhitzen des TiAl-Legierungsmaterials auf einen Temperaturbereich zwischen 1200 °C oder höher und 1350 °C oder niedriger.

## Revendications

1. Matériau en alliage TiAl (10) pour le forgeage à chaud, comprenant :
une substrat d'alliage TiAl (12) constitué d'un alliage TiAl contenant 42 % atomique ou plus et 45 % atomique ou moins d'Al, 3 % atomique ou plus et 6 % atomique ou moins de Nb, 3 % atomique ou plus et 6 % atomique ou moins de V, 0,1 % atomique ou plus et 0,3 % atomique ou moins de B, et le reste étant constitué de Ti et d'impuretés inévitables,
une couche intermédiaire (14) formée sur une surface du substrat d'alliage TiAl (12), et
une couche de titane (16) formée sur une surface de la couche intermédiaire (14), dans lequel
la couche intermédiaire (14) est constituée d'une première couche (18) formée sur un côté du substrat d'alliage TiAl (12) et constituée de l'alliage TiAl, lequel devient du β-TiAl dans une plage de température de forgeage à chaud entre 1200 °C ou plus et 1350 °C ou moins, et d'une deuxième couche (20) formée sur un côté de la couche de titane (16) et constituée d'un matériau β-Ti,
dans lequel la première couche (18) est constitué de l'alliage TiAl contenant 38 % atomique ou plus et 43 % atomique ou moins d'Al, 3 % atomique ou plus et 6 % atomique ou moins de V, 3 % atomique ou plus et 6 % atomique ou moins de Nb, et le reste étant constitué de Ti ; et
la deuxième couche (20) est constituée du matériau β-Ti contenant 25 % atomique ou plus et 38 % atomique ou moins d'Al, 3 % atomique ou plus et 6 % atomique ou moins de V, 3 % atomique ou plus et 6 % atomique ou moins de Nb, et le reste étant constitué de Ti ; et
dans lequel la couche de titane (16) est constituée d'un matériau α-Ti.

2. Procédé de fabrication d'un matériau en alliage TiAl (10) pour le forgeage à chaud, comprenant :
une étape de formation de substrat d'alliage TiAl (S10) destinée à former un substrat d'alliage TiAl (12) par fusion et coulée d'un matériau brut d'alliage TiAl contenant 42 % atomique ou plus et 45 % atomique ou moins d'Al, 3 % atomique ou plus et 6 % atomique ou moins de Nb, 3 % atomique ou plus et 6 % atomique ou moins de V, 0,1 % atomique ou plus et 0,3 % atomique ou moins de B, et le reste étant constitué de Ti et d'impuretés inévitables,
une étape de revêtement en titane (S12) destinée à revêtir le substrat d'alliage TiAl (12) avec un matériau de titane constitué d'un matériau α-Ti, et
une étape de formation de couche intermédiaire (S14) destinée à former une couche intermédiaire (14) par application d'une compression isostatique à chaud au substrat d'alliage TiAl (12) revêtu avec le matériau de titane dans une plage de température entre 1200 °C ou plus et 1275 °C ou moins, à 150 MPa ou plus, pendant une plage horaire entre 1 heure ou plus et 5 heures ou moins, de manière à ce que le substrat d'alliage TiAl (12) réagisse avec le matériau de titane.

3. Procédé de fabrication du matériau en alliage TiAl (10) selon la revendication 2, dans lequel
une épaisseur du matériau de titane est comprise dans une plage entre 0,5 mm ou plus et 2 mm ou moins.

4. Procédé de forgeage à chaud d'un matériau en alliage TiAl pour le forgeage à chaud, comprenant :
une étape de revêtement en titane (S20) destinée à revêtir, avec un matériau de titane constitué d'un matériau α-Ti, un substrat d'alliage TiAl (12) contenant 42 % atomique ou plus et 45 % atomique ou moins d'Al, 3 % atomique ou plus et 6 % atomique ou moins de Nb, 3 % atomique ou plus et 6 % atomique ou moins de V, 0,1 % atomique ou plus et 0,3 % atomique ou moins de B, et le reste étant constitué de Ti et d'impuretés inévitables ;
une étape de formation de couche intermédiaire (S22) destinée à obtenir un matériau en alliage TiAl, en soumettant le substrat d'alliage TiAl (12) revêtu avec le matériau de titane à une compression isostatique à chaud dans une plage de température entre 1200 °C ou plus et 1275 °C ou moins, à 150 MPa ou plus, pendant une plage horaire entre 1 heure ou plus et 5 heures ou moins, de manière à le faire réagir avec le matériau de titane pour former une couche intermédiaire (14), et
une étape de forgeage à chaud (S24) destinée à forger à chaud le matériau en alliage TiAl en chauffant le matériau en alliage TiAl dans une plage de température entre 1200 °C ou plus et 1350 °C ou moins.
